# DEMANDE DE BREVET EUROPEEN

(11) **EP 0 555 600 A1**
(43) Date de publication de la demande: **18.08.1993**
(21) Numéro de dépôt: 92400376.7
(22) Date de dépôt: 12.02.1992
(51) Int. Cl.: E04H 4/12, C02F 1/68

(54) **Dispositif à immerger pour libération contrôlée de produits de désinfection piscine**

(71) Demandeur: SETRIC INTERNATIONAL S.A., F-31450 Deyme (FR)
(72) Inventeur: Chelle, René c/o SETRIC S.A., F-31450 Deyme (FR)

(57) **Abrégé**

L'invention concerne un procédé et un dispositif capable de réaliser, de manière souple et adaptée, le traitement chloré des eaux de piscine.

Le procédé utilise la dissolution d'un agent chloré par une circulation d'eau contrôlée : le contrôle de la circulation d'eau contrôle la vitesse de dissolution et par le fait adapte le taux de chlore aux besoins.

Le dispositif est constitué d'un récipient (C) contenant l'agent chloré et comportant deux orifices (A,B) tels que l'eau puisse circuler de l'un vers l'autre. La surface d'ouverture de chacun des deux orifices peut être contrôlée manuellement en manoeuvrant un volet (P1) sur une grille (P2).

Le dispositif est destiné à être placé dans une zone de circulation des eaux à traiter, par exemple dans le skimmer d'une piscine. Dans cette application, le contrôle des ouvertures est capable de faire varier la vitesse de dissolution dans de larges proportions correspondant aux deux réglages extrêmes d'une chloration choc et d'une chloration entretien.

Le dispositif selon l'invention est plus spécialement destiné aux traitements des eaux de piscine.

## Description

La présente invention complète celle du brevet n°90 402110 2 décrite sous le titre "Dispositif à immerger, pour libération de produits chimiques nécessaires au traitement des eaux de piscines permettant d'utiliser des produits soit incompatibles entre eux à forte concentration, soit compatibles mais à solubilités différentes".

Elle concerne le mode et le mécanisme de réglage manuel permettant de faire varier la vitesse de diffusion des produits chimiques solides, en particulier les produits chlorés. Parmi ces produits, le Dichloroisocyanurate de Sodium et l'Acide Trichloroisocyanurique.

La désinfection des eaux de piscine vise à neutraliser et détruire des agents perturbateurs tels que les matières organiques, les microorganismes : microbes, algues, champignons ... Pour ce faire, les produits chlorés sont les plus employés. Ils génèrent dans l'eau de l'acide hypochloreux qui est une molécule éminemment oxydante et désinfectante. Le traitement de désinfection des eaux de piscines doit être assuré en permanence par un apport de produits chlorés. Les quantités à apporter dépendent de nombreux facteurs : d'une part, des conditions climatiques : température, vent, orages,rayonnements solaires..., d'autre part, des conditions d'utilisation : nombre d'utilisateurs, notamment. Les quantités à apporter sont donc essentiellement variables : on appelle chloration "instantanée ou choc" l'apport de produits chlorés qui permet d'atteindre très vite le taux désiré de chlore dans la piscine; on appelle chloration "entretien" l'apport continu qu'il convient de faire en utilisation courante. Entre ces deux extrêmes, on parle de chloration "rapide".

Ces trois formes de chlorations : "choc","entretien", "rapide",sont aujourd'hui obtenues par des produits différents et complémentaires. Ils sont différents en présentations : granulés, pastilles, galets ou blocs. Ils sont différents en composition : par exemple, le Dichloroisocyanurate de Sodium, ayant une solubilité rapide, permet d'attendre très vite de forts taux de chlore et est plutôt utilisé en chloration "choc".

Le dispositif de libération de produits chlorés, présenté ici pour invention, permet de régler manuellement leur vitesse de diffusion. Il vise à permettre le remplacement de trois produits différents définis par les fonctions de chloration "choc", "rapide", et "entretien", par un seul produit réglable. En modifiant le réglage d'utilisation, on ajustera la vitesse de diffusion des produits aux réels besoins hygiéniques de l'eau.

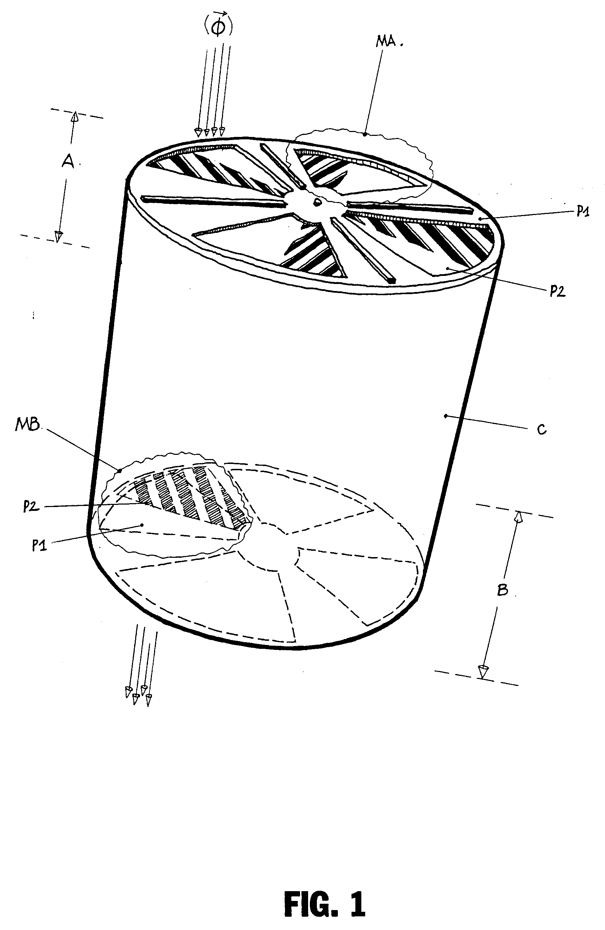

Le dispositif présent (fig 1), comporte un seul compartiment cubique, cylindrique ou de toute autre forme compatible avec l'usage revendiqué, et contient le produit à faire diffuser. Le produit peut être sous forme de poudre, de granulés ou de blocs. Il peut être composé d'un seul type de produit chloré ou d'un mélange de plusieurs produits chlorés ou non chlorés.

Le compartiment comporte deux orifices A et B sur deux faces opposées du compartiment. Ces orifices sont obturés avant usage. Au moment de l'immersion dans le bassin ou dans le skimmer, les orifices sont dégagés pour laisser circuler l'eau.

Chaque orifice comporte un mécanisme de réglage de l'ouverture MA et MB. Ce ménanisme associe deux plaques P1 P2 en mouvement relatif. L'une est constituée d'une grille, l'autre d'une plaque d'obturation que l'on peut manuellement actionner pour dégager tout ou partie de la surface grillagée.

L'eau pénètre dans le compartiment en circulant( 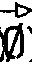 )d'un orifice à l'autre. Elle dissout, pendant la circulation, les produits contenus dans le compartiment. La vitesse de dissolution est réglée en augmentant ou en réduisant les surfaces grillagées en regard l'une de l'autre. Si les orifices sont complètement ouverts, l'eau en circulant entraîne et dissout le produit dans la piscine. Ce réglage correspond à une chloration "choc" ou à une chloration "rapide". On peut, par exemple, dissoudre 600 grammes de Dichloroisocyanurate en granulés en moins de trois heures.

Si les orifices sont à peine ouverts, la diffusion et donc la dissolution est très limitée et peut durer, pour la même quantité de 600 grammes de Dichloroisocyanurate en granulés, plus de un mois. Ce réglage définit une chloration très lente d'entretien.

### Utilisation du procédé

Le compartiment récipient, avec ses deux orifices, équipés des systèmes de réglage déjà décrits constitue le procédé objet de l'invention.

Il sera, le plus souvent, utilisé dans le skimmer de la piscine et donc placé dans le circuit de filtration. Les orifices en regard seront placés alignés avec le courant de circulation de l'eau.

Il peut aussi être utilisé dans un appareil spécifique appelé"chlorinateur", placé en dérivation sur le circuit de filtration. L'ensemble bénéficie alors d'un réglage supplémentaire grâce aux vannes qui contrôlent le débit dans la dérivation.

Il peut, enfin, être simplement immergé dans l'eau de piscine grâce à un système flottant ou grâce à un système de lest, plaçant le compartiment-récipient au fond de la piscine.

### Avantages du procédé

L'avantage principal du dispositif objet de l'invention est qu'il permet, grâce au réglage de la vitesse de dissolution des produits chlorés, de réaliser avec un seul dispositif : une chloration "choc" ou une chloration "rapide" ou une chloration "entretien" qui impliquait jusqu'ici l'usage de trois produits distincts.
. L'invention apporte donc une grande simplification du traitement. Elle permet de réduire la diversité des produits stockés chez l'utilisateur.
. Un deuxième avantage est d'éviter que l'utilisateur ait un contact direct avec les produits chlorés concentrés. Tous les réglages sont commandés de l'extérieur sans avoir à ouvrir le récipient.
. Un troisième avantage est la possibilité, en cours d'utilisation, de changer à volonté, le réglage et la vitesse de dissolution. Il est ainsi possible d'optimiser la vitesse de dissolution en fonction de l'utilisation réelle et des conditions climatiques. Le procédé permet donc une réduction sensible du coût de traitement.
. Le quatrième avantage est lié à la possibilité de mélanger avec les produits chlorés de base, d'autres produits définissant des traitement complémentaires : traitements algicides, anti-calcaires, etc... Il faut, dans ce cas, que les produits soient chimiquement compatibles entre eux et qu'ils présentent des vitesses de dissolution comparables dans l'eau de circulation.
. Le cinquième avantage est que le compartiment-récipient peut être associé à d'autres compartiments tels que l'invention à laquelle cette innovation est associée le décrit.

Le dispositif est conçu pour être jetable, mais il n'est point exclu, pour l'usage, de le recharger ou de le faire recharger.

## Revendications

1. Dispositif à immerger suivant le brevet n° 90 402110 2 caractérisé par le fait qu'il ne comprend qu'un seul compartiment équipé d'un réglage contrôlant l'intensité du traitement.

2. Dispositif à immerger selon revendication 1 caractérisé par le fait qu'il peut ne contenir qu'un seul agent actif par exemple, des granulés d'acide Trichloroisocyanurique.

3. Dispositif à immerger selon revendication 1 et 2, caractérisé par le fait que le compartiment comporte deux orifices dont les ouvertures sont manuellement réglables.

4. Dispositif à immerger selon revendications 1, 2 et 3, caractérisé par le fait que les deux orifices sont disposés de manière à ce que l'eau circule au travers de l'agent actif et que le débit de circulation soit contrôlé entre des valeurs nulles et des valeurs élevées réalisant la dissolution des granulés en quelques heures.

5. Dispositif à immerger selon revendication 1, 2, 3 et 4, caractérisé par le fait que les réglages sont calculés au minimum pour réaliser un traitement chloré d'entretien et au maximum pour réaliser un traitement chloré "instantané" ou "choc".

6. Dispositif à immerger selon revendication 1, 3, 4 et 5, caractérisé par le fait qu'il peut contenir plusieurs agents actifs compatibles.
